# EUROPEAN PATENT APPLICATION

(11) **EP 3 343 372 A1**
(43) Date of publication of application: **04.07.2018**
(21) Application number: 17208813.0
(22) Date of filing: 20.12.2017
(51) Int. Cl.: G06F 9/52, G06F 9/50, G06F 12/0806, G06F 12/084, G06F 12/0891

(54) **DISTRIBUTED CACHE CLEANUP FOR ANALYTIC INSTANCE RUNS PROCESSING OPERATING DATA FROM INDUSTRIAL ASSETS**

(30) Priority: 29.12.2016 US 201615393755
(71) Applicant: General Electric Company, Schenectady, NY 12345 (US)
(72) Inventor: CHANG, Tun, San Ramon, CA California 94583 (US); GUIN, Arnab, San Ramon, CA California 94583 (US)
(74) Representative: Illingworth-Law, William Illingworth

(57) **Abstract**

In some embodiments, a cloud-based services architecture 650 may receive operating data associated with a set of assets from a set of enterprise system devices 610. The cloud-based services architecture 650 may then process the received operating data. A plurality of computing platforms 630 may execute instance runs of a plurality of analytics 620, with each instance run being associated with an industrial asset. A distributed cache 660 may be shared by the plurality of analytic instance runs executing on the plurality of computing platforms 630. An orchestration run-time execution engine 640 may maintain an overall count value 665 that represents a number of analytic instance runs currently utilizing the distributed cache 660. Note that the distributed cache 660 may be emptied when the overall count value indicates that no analytic instance runs are still utilizing the distributed cache 660.

## Description

### BACKGROUND

The invention relates generally to cloud-based systems to facilitate enterprise analytics. In particular, embodiments may facilitate distributed cache cleanup for analytic instance runs processing operating data from industrial assets.

An enterprise may collect operating data from a set of enterprise system devices. For example, the enterprise may deploy sensors associated with one or more industrial assets *(e.g.,* wind farm devices, turbine engines, *etc.)* and collect data as those assets operate. Note that the amount of industrial data that can be collected in this way may be significant in terms of volume, velocity, and/or variety. To help extract insight from the data, the enterprise may employ a "cloud-based" industrial internet platform to facilitate creation of applications to turn real-time operational data into insights. As used herein, a "cloud-based" industrial platform may help connect machines to collect key industrial data and stream the information to the cloud and/or leverage services and development tools to help the enterprise focus on solving problems. In this way, the cloud-based industrial platform may help an enterprise deploy scalable services and end-to-end applications in a secure environment. For example, analytic instance runs may be executed by a plurality of computing platforms to process operating data associated with the industrial assets.

In some cases, a distribute cache may be employed to facilitate execution of the analytic instance runs. The distributed cache might store, for example, information about how to fetch data, how to store data, *etc.* Note that the overall performance of the system may be degraded as a result of memory leaks and other problems associated with such a distributed cache. Thus, it may be desirable to provide systems and methods to automatically facilitate distributed cache cleanup for analytic instance runs in an efficient and accurate manner.

### BRIEF DESCRIPTION

Some embodiments are associated with a cloud-based services architecture that may receive operating data associated with a set of assets from a set of enterprise system devices. The cloud-based services architecture may then process the received operating data. A plurality of computing platforms may execute instance runs of a plurality of analytics, with each instance run being associated with an industrial asset. A distributed cache may be shared by the plurality of analytic instance runs executing on the plurality of computing platforms. An orchestration run-time execution engine may maintain an overall count value that represents a number of analytic instance runs currently utilizing the distributed cache. Note that the distributed cache may be emptied when the overall count value indicates that no analytic instance runs are still utilizing the distributed cache.

Some embodiments are associated with: means for receiving, at a cloud-based services architecture from a set of enterprise system devices, operating data associated with a set of assets; means for processing, by the cloud-based services architecture, the received operating data; means for executing, by a plurality of computing platforms, instance runs of a plurality of analytics, each instance run being associated with an industrial asset; means for sharing a distributed cache by the plurality of analytic instance runs executing on the plurality of computing platforms; and means for maintaining, by an orchestration run-time execution engine, an overall count value that represents a number of analytic instance runs currently utilizing the distributed cache, wherein the distributed cache is emptied when the overall count value indicates that no analytic instance runs are still utilizing the distributed cache.

A technical feature of some embodiments is a computer system and method that automatically facilitates distributed cache cleanup for analytic instance runs in an efficient and accurate manner.

Other embodiments are associated with systems and/or computer-readable medium storing instructions to perform any of the methods described herein.

### DRAWINGS

FIG. 1 is a high level block diagram of a system according to some embodiments.
FIG. 2 illustrates a system with a distributed cache according to some embodiments.
FIG. 3 is block diagram of a system with an overall count value in accordance with some embodiments.
FIG. 4 is a flow chart of a method in accordance with some embodiments.
FIG. 5 is an example of a Platform as a Service being provided according to some embodiments.
FIG. 6 is a block diagram of a system to facilitate enterprise analytics according to some embodiments.
FIG. 7 is a sample analytics flow in accordance with some embodiments.
FIG. 8 is a block diagram of a cloud-based services architecture to facilitate enterprise analytics according to some embodiments.
FIG. 9 is an apparatus that may be provided in accordance with some embodiments.
FIG. 10 is a tabular view of a portion of a code instance database in accordance with some embodiments of the present invention.
FIG. 11 illustrates an interactive graphical user display according to some embodiments.

### DETAILED DESCRIPTION

Some embodiments disclosed herein automatically facilitate distributed cache cleanup for analytic instance runs in an efficient and accurate manner. Some embodiments are associated with systems and/or computer-readable medium that may help perform such a method.

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

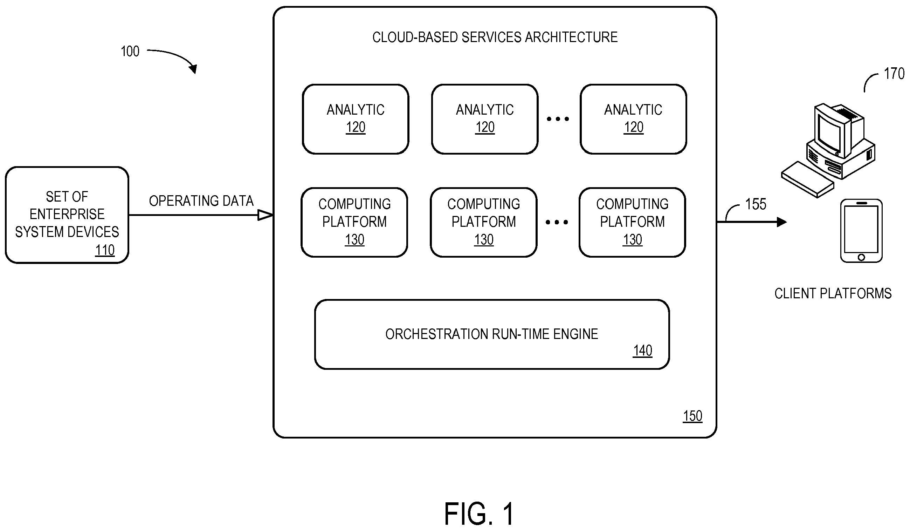

An enterprise may collect operating data from a set of enterprise system devices. For example, the enterprise may deploy sensors associated with one or more industrial assets *(e.g.,* wind farm devices, turbine engines, *etc.)* and collect data as those assets operate. Moreover, the amount of industrial data that can be collected in this way may be significant in terms of volume, velocity, and/or variety. To help extract insight from the data (and perhaps gain a competitive advantage), the enterprise may employ an industrial internet platform to facilitate creation of applications to turn real-time operational data into insights. FIG. 1 is a high level block diagram of a system 100 according to some embodiments. The system 100 includes a cloud-based services architecture 150 that receives operating data from a set of enterprise system devices 110. The cloud-based services architecture 150 may, for example, output results 155 that are provided to client platforms 170 (e.g., indicating a current operating condition of industrial assets, potential problems, *etc.).*

The cloud-based services architecture 150 includes a number of analytics 120 that may execute on computing platforms 130 to process the received operating data. Each analytic 120 may receive, process, and output information, and a designer may combine the analytics 120 in different ways to achieve the desired results 155 *(e.g.,* the output of one analytic may be provided to another analytic as an input). An orchestration run-time engine 140 may help coordinate the execution of the analytics 120.

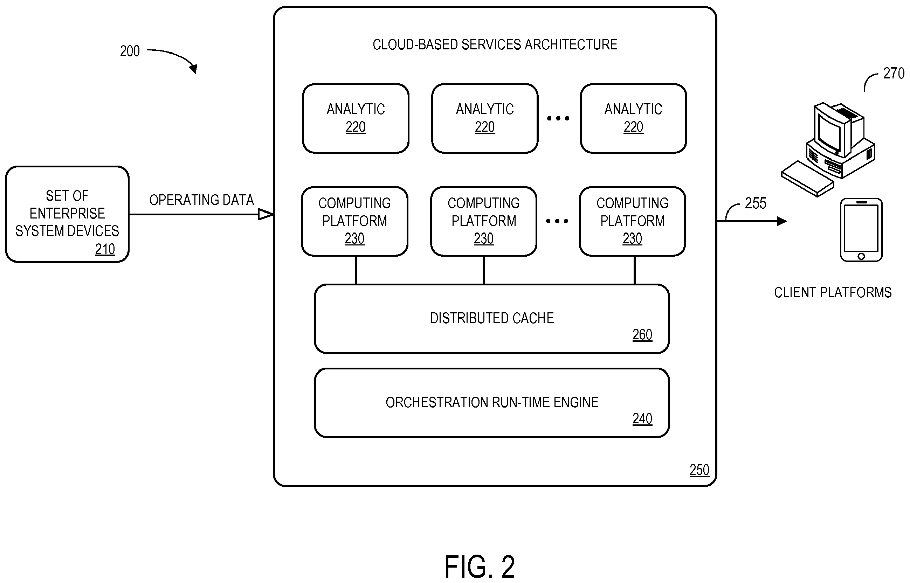

In some cases, a distribute cache may be employed to facilitate execution of the analytic instance runs. The distributed cache might store, for example, information about how to fetch data, how to store data, *etc.* FIG. 2 illustrates a system 200 with a distributed cache 260 according to some embodiments. As before, the system 200 includes a cloud-based services architecture 250 that receives operating data from a set of enterprise system devices 210. The cloud-based services architecture 250 may, for example, output results 255 that are provided to client platforms 270 and include a number of analytics 220 that may execute on computing platforms 230 to process the received operating data. An orchestration run-time engine 240 may help coordinate the execution of the analytics 220. Note that different analytics 220 may store data into and retrieve data from the distributed cache 260 during run-time. Such an approach may provide for fast access *(e.g.,* as compared to accessing a database) and improve the operation of the system 200.

The orchestration run-time engine 240 may physically create a sequence or series of analytics 220 to be executed, ensure that any required data is available, check information quality, smooth data, implement anomaly detection algorithms, *etc.* As used herein, the phrase "orchestration step" may refer to a step that has an associated analytic 220 and an understand of how to fetch/store data for that analytic (e.g., from which source and/or to which data store). Note that a series of analytics may be executed for an "asset group" (which could, for example, contain hundreds of thousands individual industrial assets). The phrase "orchestration run" may refer to the execution of an orchestration from an entire asset group.

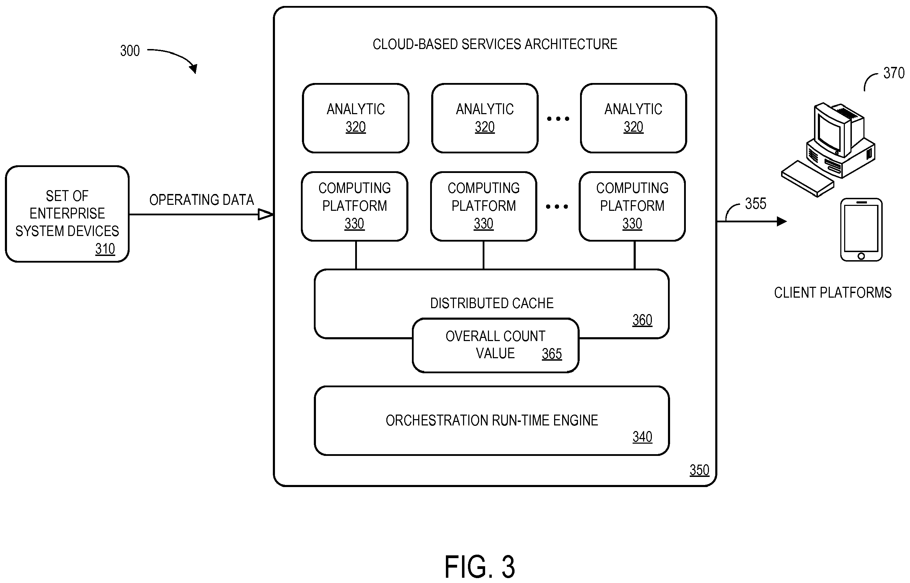

Note that the overall performance of the system 200 may be degraded as a result of memory leaks and other problems associated with use of such a distributed cache 260. Thus, it may be desirable to provide systems and methods to automatically facilitate distributed cache cleanup for analytic instance runs in an efficient and accurate manner. FIG. 3 is block diagram of a system with an overall count value 365 in accordance with some embodiments. As before, the system 300 includes a cloud-based services architecture 350 that receives operating data from a set of enterprise system devices 310. The cloud-based services architecture 350 may, for example, output results 355 that are provided to client platforms 370 and include a number of analytics 320 that may execute on computing platforms 330 to process the received operating data. An orchestration run-time engine 340 may help coordinate the execution of the analytics 320. Note that different analytics 320 may store data into and retrieve data from a distributed cache 360 during run-time. During the run of an orchestration using one or more the analytics 320, data related to orchestration (e.g., asset instances, steps, metadata, *etc.)* may be stored in the distributed cache 360 for performant run-time lookup during processing. The entire cache data for an orchestration should only be cleaned when all the individual asset instance runs have completed. Some embodiments described herein use an overall count value 365 to provide an efficient method, in runtime and memory consumption, for detecting the completion of all asset runs taking into account high concurrency of completion events. Note that embodiments may use distributed cache locking coupled with cache partitioning of asset run completion data to help eliminate memory leaks and provide for a timely cleanup. The overall count value 365 may help the system 300 figure out when the cache needs to be cleaned using minimum storage for metadata and efficient lookup of cached structures. Such an approach may provide runtime performance and memory improvements for orchestration runs.

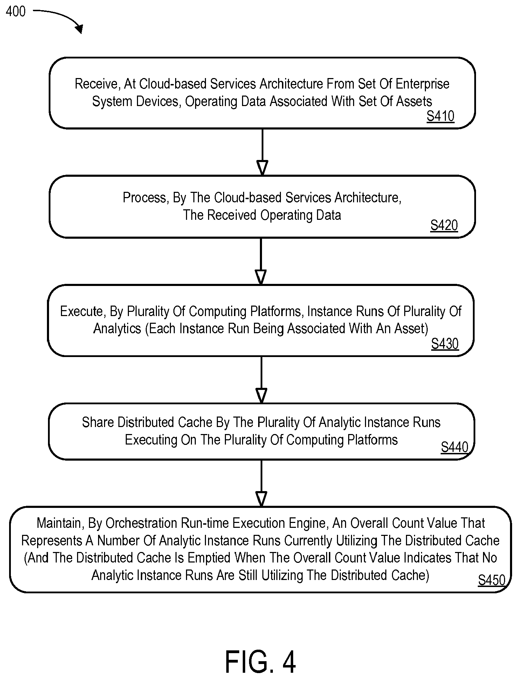

Note that the systems 100, 200, 300 of FIGS. 1 through 3 are provided only as examples, and embodiments may be associated with additional elements or components. According to some embodiments, the elements of the systems 100, 200, 300 automatically facilitate distributed cache cleanup for analytic instance runs in an efficient and accurate manner. Consider, for example, FIG. 4 which is a flow chart of a method 400 associated with a method in accordance with some embodiments. The flow charts described herein do not imply a fixed order to the steps, and embodiments of the present invention may be practiced in any order that is practicable. Note that any of the methods described herein may be performed by hardware, software, or any combination of these approaches. For example, a non-transitory computer-readable storage medium may store thereon instructions that when executed by a machine result in performance according to any of the embodiments described herein.

At S410, a cloud-based services architecture may receive operating data associated with a set of assets from a set of enterprise system devices. As used herein, the phrase "enterprise system devices" might refer to, for example, devices associated with sensors, a big data stream, an industrial asset, a power plant, a wind farm, a turbine, power distribution, fuel extraction, healthcare, transportation, aviation, manufacturing, water processing, *etc.* Note that the cloud-based services architecture might be further associated with edge software, data management, security, development operations, and/or mobile applications.

At S420, the cloud-based services architecture may process the received operating data (e.g., using a series of analytics). At S430, a plurality of computing platforms may execute instance runs of a plurality of analytics. For example, each instance run might be associated with an industrial asset. At S440, the system may arrange to share a distributed cache by the plurality of analytic instance runs executing on the plurality of computing platforms. According to some embodiments, the distributed cache might store, for run-time look-up during processing, data related to orchestration, asset instance data, steps, metadata, *etc.* Note that the distributed cache might comprise an in-memory distributed cache.

At S450, an orchestration run-time execution engine may maintain an overall count value *(e.g.,* in software, a hardware register, *etc.)* that represents a number of analytic instance runs currently utilizing the distributed cache. For example, the maintenance of the overall count value might include incrementing the overall count value when a new analytic instance run utilizes the distributed cache. Similarly, the maintenance of the overall count value might include decrementing the overall count value when an analytic instance run is done using the distributed cache. According to some embodiments, the distributed cache is emptied when the overall count value indicates that no analytic instance runs are still utilizing the distributed cache *(e.g.,* the overall count value equals zero).

Note that multiple analytic instances runs may execute simultaneously. To avoid race conditions, a first analytic instance run utilizing the distributed cache may lock the overall count value such that other analytic instance runs cannot update the overall count value until the first analytic instance run is done using the distributed cache. According to some embodiments, a "distributed" lock may be provided for the distributed cache. For example, a first analytic instance run executing on a first computing platform may implement a distributed lock on the overall count value such that other analytic instance runs executing on other computing platforms cannot update the overall count value until the first analytic instance run is done using the distributed cache.

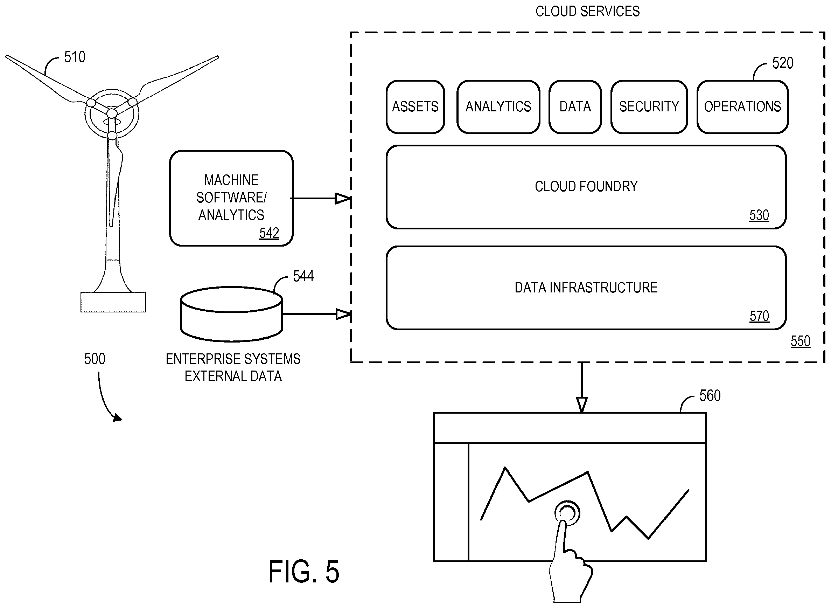

FIG. 5 is an example 500 of a Platform as a Service ("PaaS") being provided according to some embodiments. The example 500 includes an industrial asset 510 associated with machine software/analytics 542 and enterprise system external data 54 that provide information to cloud services 550. The cloud services 550 include a cloud foundry 530 associated with specific functionality 520 and data infrastructure 540. The functionality 520 might include, for example, assets (e.g., associated with specific industrial equipment), analytics (e.g., utilizing a distributed cache in accordance with any of the embodiments described herein to run key complex analysis algorithms on important data assets), data *(e.g.,* to coordinate services for efficient data storage and/or modeling), security (e.g., to establish clear authorization and/or authentication for application), and/or operations (e.g., to manage building, testing, and/or deploying of applications and services).

The cloud services 550 may, for example, facilitate the presentation of interactive displays 560 (e.g., mobile display) to a user in accordance with any of the embodiments described herein. For example the cloud services 550 may automatically facilitate distributed cache cleanup for analytic instance runs in an efficient and accurate manner. In this way, the system may comprise a machine-centric solution that supports heterogeneous data acquisition, storage, management, integration, and access. Moreover, the system may provide advanced predictive analytics and guide users with intuitive interfaces that are delivered securely in the cloud. In this way, users may rapidly build, securely deploy, and effectively operation industrial applications in connection with the industrial Internet of Things ("IoT").

Note that a cloud services 550 platform may offer a standardized way to enable an enterprise to quickly take advantage of operational and business innovations. By using the platform which is designed around a re-usable building block approach, developers can build applications quickly, leverage customized work, reduce errors, develop and share best practices, lower any risk of cost and/or time overruns, and/or future-proof initial investments. Moreover, independent third parties may build applications and services for the platform, allowing businesses to extend capabilities easily by tapping an industrial ecosystem. In this way, the platform may drive insights that transform and/or improve Asset Performance Management ("APM"), operations, and/or business.

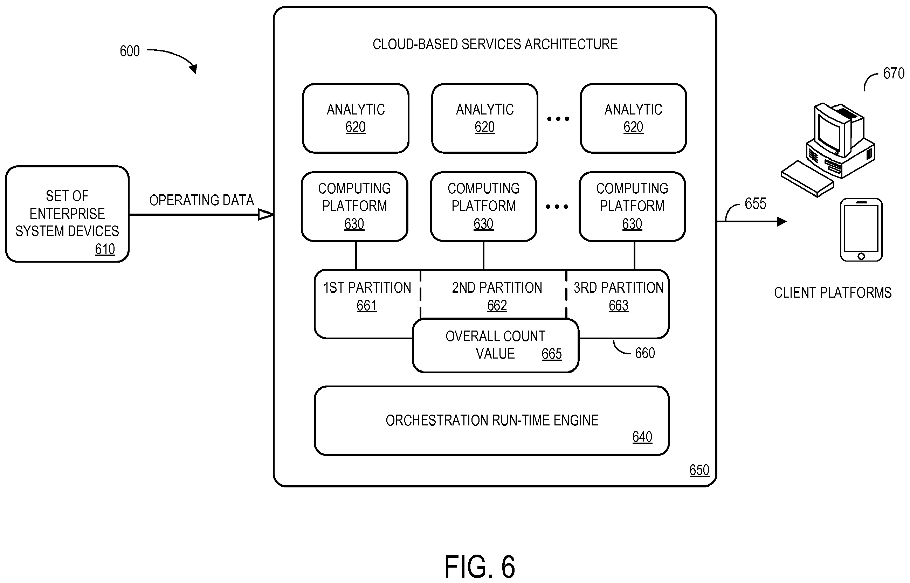

According to some embodiments, a distributed cache may be partitioned such that different partitions are associated with different information about analytic instance runs. For example, FIG. 6 is a high level block diagram of a system 600. In particular, the system includes a set of enterprise system devices 610, such as sensors associated with one or more industrial assets. The enterprise system devices 610 may provide operating data *(e.g.,* an exhaust temperature, a fan speed, *etc.)* to a cloud-based service architecture 650. The cloud-based services architecture 650 may include an orchestration run-time execution engine 640 and, in some cases, tenant-specific spaces, to execute analytics 620 on computing platforms 630 utilizing a distributed cache 660 associated with an overall count value 665. In this embodiment, the distributed cache 660 may be divided into a number of sections or partitions (e.g., a first partition 661, a second partition 662, and third partition 663). The different partitions 661, 662, 663 might be used to store different types of information, such as asset data, asset group data, orchestration step data, analytic input output data, *etc.* According to some embodiments, an enterprise may "customize" the analytics 620, such as by defining models, algorithms, inputs, outputs, *etc.* to be associated with each analytic 620.

Note that in some cases, it may be desirable to have an output of one analytic 620 act as an input to another analytic. In the example of FIG. 6, the orchestration run-time execution engine 640 may arrange for operating data to be provided as an input to a first analytic 620. After performing logical algorithms, operations, *etc.* on the input, the first analytic 620 may generate an output that is provided directly to a second analytic 620 as an input. According to some embodiments, an output may be provided to an asset service, a time-series service, and/or a Relational DataBase Management System ("RDBMS"). Moreover, a relationship between the first analytic 620 and the second analytic 620 might be associated with a sequence flow, a conditional flow, a custom data connector, a model library, and/or an analytic message queue. According to some embodiments, the cloud-based services architecture 650 may further include a deployment platform to update microservice features in accordance with any of the embodiments described herein.

Note that operating data may be associated with a "big data" stream that is received by the cloud-based services architecture 650 on a periodic or asynchronous basis. Moreover, the client platforms 670 may, for example, be used to execute a web browser, smartphone application, *etc.* to provide results from and/or facilitate understating of the big data. As used herein, the phrase "big data" may refer to data sets so large and/or complex that traditional data processing applications may be inadequate (e.g., to perform appropriate analysis, capture, data curation, search, sharing, storage, transfer, visualization, and/or information privacy for the data). Analysis of big data may lead to new correlations, to spot business trends, prevent diseases, *etc.* Scientists, business executives, practitioners of media and advertising and governments alike regularly meet difficulties with large data sets in areas including Internet search, finance and business informatics. Scientists encounter limitations in meteorology, genomics, complex physics simulations, biological and environmental research, *etc.*

Any of the devices described with respect to the system 600 might be, for example, associated with a Personal Computer ("PC"), laptop computer, smartphone, an enterprise server, a server farm, and/or a database or similar storage devices. According to some embodiments, an "automated" cloud-based services architecture 650 may facilitate the collection and analysis of big data. As used herein, the term "automated" may refer to, for example, actions that can be performed with little (or no) intervention by a human.

As used herein, devices, including those associated with the cloud-based services architecture 650 and any other device described herein may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

Although a single cloud-based services architecture 650 is shown in FIG. 6, any number of such devices may be included. Moreover, various devices described herein might be combined according to embodiments of the present invention. For example, in some embodiments, the cloud-based services architecture 650 and orchestration run-time execution engine 640 might be co-located and/or may comprise a single apparatus.

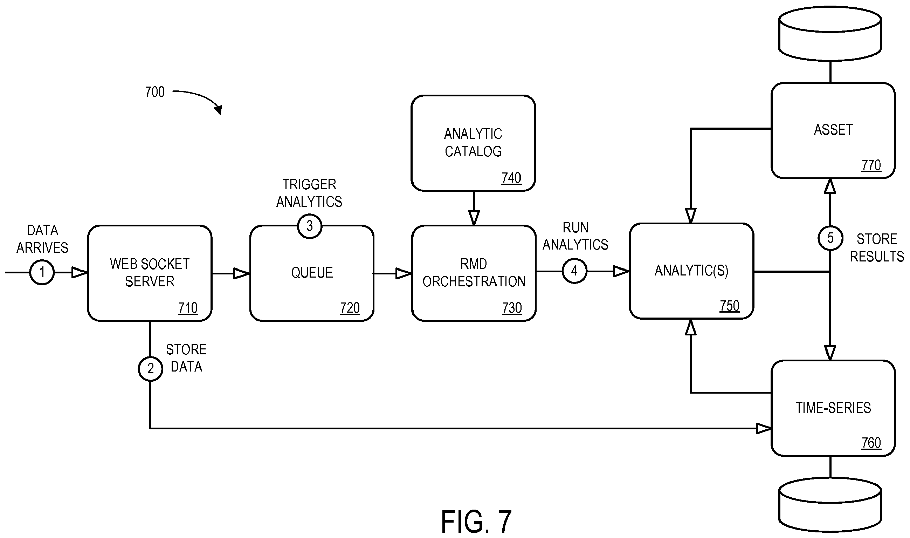

FIG. 7 is a sample analytics flow 700 in accordance with some embodiments. At (1), data may arrive at a web socket server 710. The data may be stored at (2) into a time-series 760. At (3), queue-based trigger analytics 720 may be performed and provided to Remote Monitoring and Diagnosis ("RMD") orchestration 730. The RMD orchestration 730 may utilize an analytic catalog 740 and provide run analytics to an analytics element 750 at (4). Note that the analytics element 750 may operate in accordance with any of the embodiments described herein. For example, the flow 700 may automatically facilitate distributed cache cleanup for analytic instance runs in an efficient and accurate manner. The results from the analytics element 750 may be stored in an asset service 770 and/or the time-series service 760 at (5). Such an embodiment, for example, may handle data as it arrives (or changes) by placing an event on a messaging topic. A project may then read messages off of those queues, decide which analytic orchestrations to invoke, obtain the appropriate Business Process Model and Notation ("BPMN") data and analytic configuration and pass that to the orchestration engine (which may in turn invoke analytic microservices in accordance with any of the embodiments described herein).

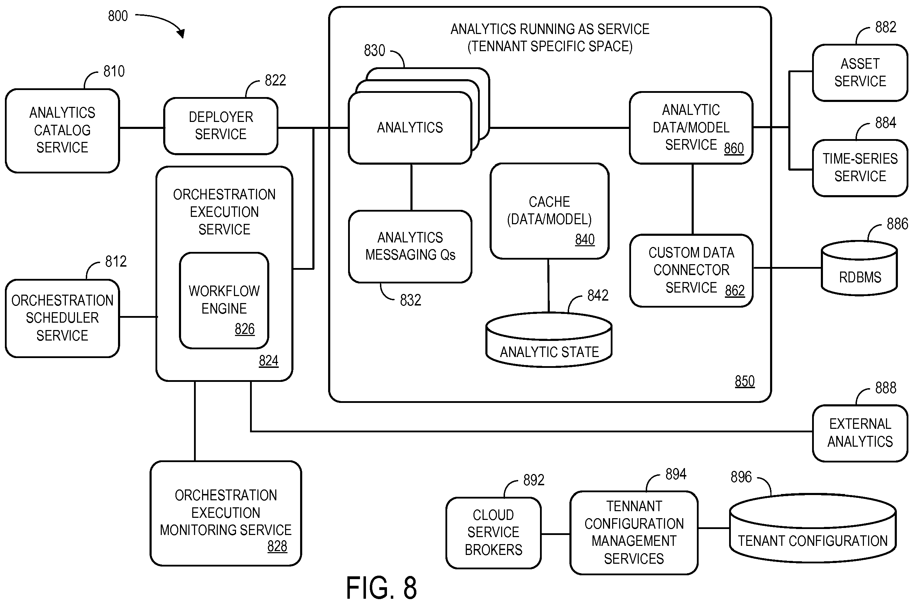

FIG. 8 is a block diagram of a cloud-based services architecture 800 to facilitate enterprise analytics according to some embodiments. As illustrated in FIG. 7, an orchestration execution service 824 may interact with analytics running as a service 850 in a tenant-specific space. Moreover, a deployer service 822 may access an analytics catalog service 810 (and a workflow engine 826 of the orchestration execution service 824 may access an orchestration schedule service 812) to deploy analytics 830 in the analytics running as a service 850. The orchestration execution service 824 may also store information into an orchestration execution monitoring service 828 (e.g., via monitoring messaging) and external analytics 888. Note that the analytics running as a service 760 may automatically facilitate feature updates and/or analytic model chaining within the tenant-specific space in an efficient and accurate manner in accordance with any of the embodiments described herein.

The analytics 830 may interact with analytic message queues 832, an analytic data/model service 860, and/or a cache 840 for data or a model (e.g., via get/put operations). The architecture 800 may use an overall count value to facilitate cleaning of the cache 840 in accordance with any of the embodiments described herein. The analytic data/model service 860 may provide results to an asset service 882 and/or a time-series service 884 as well as to an RDBMS 886 via a custom data connector service 862. Note that the cache 840 may store an analytic state 842 and be used to store an output of a first analytic model within the tenant-specific space before being provided as an input of a second analytic model. The cache 840 might comprise, for example, an in-memory cache of the tenant-specific space. Because this process is performed entirely "in memory" inside the tenant-specific space, the cache 840 may help make execution of the models efficient and relatively fast. According to some embodiments, tenant configuration management services 894 may receive information from cloud service brokers 892 and store information into a tenant configuration database 896.

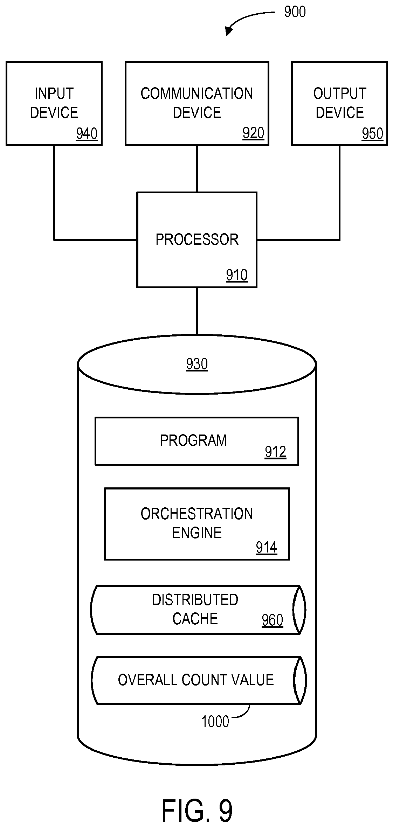

The embodiments described herein may be implemented using any number of different hardware configurations. For example, FIG. 9 illustrates an apparatus 900 that may be, for example, associated with the system 600 of FIG. 6. The apparatus 900 comprises a processor 910, such as one or more commercially available Central Processing Units ("CPUs") in the form of one-chip microprocessors, coupled to a communication device 920 configured to communicate via a communication network (not shown in FIG. 9). The apparatus 900 further includes an input device 940 *(e.g.,* a mouse and/or keyboard to enter information about industrial asset operation, user display preferences, *etc.)* and an output device 950 *(e.g.,* a computer monitor to output interactive visualizations and reports).

The processor 910 also communicates with a storage device 930. The storage device 930 may comprise any appropriate information storage device, including combinations of magnetic storage devices *(e.g.,* a hard disk drive), optical storage devices, mobile telephones, and/or semiconductor memory devices. The storage device 930 stores a program 912 and/or an orchestration engine 914 for controlling the processor 910. The processor 910 performs instructions of the programs 912, 914, and thereby operates in accordance with any of the embodiments described herein. For example, the processor 910 might receive operating data associated with a set of assets from a set of enterprise system devices. The processor 910 may then process the received operating data. A plurality of computing platforms may execute instance runs of a plurality of analytics, with each instance run being associated with an industrial asset. A distributed cache may be shared by the plurality of analytic instance runs executing on the plurality of computing platforms. The processor 910 may also maintain an overall count value that represents a number of analytic instance runs currently utilizing the distributed cache. Note that the distributed cache may be emptied by the processor 910 when the overall count value indicates that no analytic instance runs are still utilizing the distributed cache.

The programs 912, 914 may be stored in a compressed, uncompiled and/or encrypted format. The programs 912, 914 may furthermore include other program elements, such as an operating system, a database management system, and/or device drivers used by the processor 910 to interface with peripheral devices.

As used herein, information may be "received" by or "transmitted" to, for example: (i) the apparatus 900 from another device; or (ii) a software application or module within the apparatus 900 from another software application, module, or any other source.

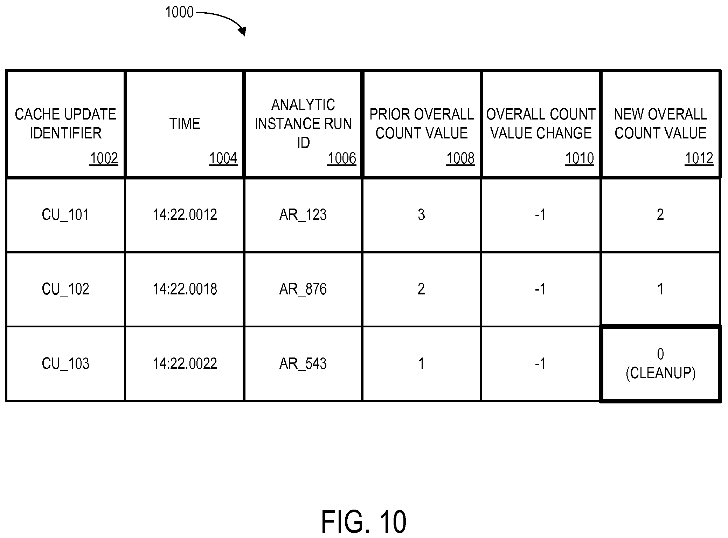

As shown in FIG. 9, the storage device 930 also stores a distributed cache 960 and an overall count value database 1000. One example of the overall count value database 1000 that may be used in connection with the apparatus 900 will now be described in detail with respect to FIG. 10. The illustration and accompanying descriptions of the database presented herein is exemplary, and any number of other database arrangements could be employed besides those suggested by the figures.

FIG. 10 is a tabular view of a portion of the overall count value database 1000 in accordance with some embodiments of the present invention. The table includes entries associated with updates that have been made to an overall count value to facilitate management of industrial assets for an enterprise. The table also defines fields 1002, 1004, 1006, 1008, 1010, 1012 for each of the entries. The fields specify: a cache update identifier 1002, a time 1004, an analytic instance run identifier 1006, a prior overall count value 1008, an overall count value change 1010, and new overall count value 1012. The information in the overall count value database 1000 may be periodically created as analytic instance runs finish using a distributed cache in connection with the monitoring of an industrial asset's operation.

The cache update identifier 1002 might be a unique alphanumeric code identifying an update to a distributed cache (and, in particular, to an overall count value maintained for the cache). The time 1004 and the analytic instance run identifier 1006 might indicate, for example, when a particular analytic instance run finished using the distributed cache identifier. The prior overall count value 1008 (which could, in some cases, have a value of hundreds of thousands) may then be adjusted by the overall count value change 1010 resulting in the new overall count value 1012. When the new overall count value 1012 equals zero, all analytic instance runs have finished using the distributed cache (as illustrated by the third entry in FIG. 10) and the cache may be safely cleaned up (emptied) by the system to improve performance.

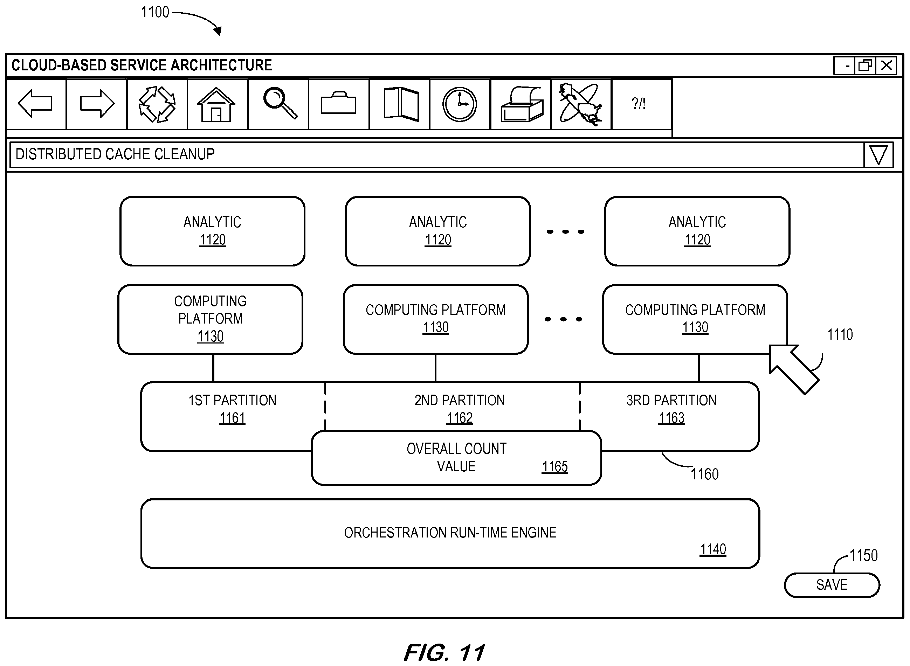

FIG. 11 illustrates an interactive graphical user display 1100 including distributed cache cleanup data in accordance with some embodiments. In particular, the display includes graphical elements representing analytics 1120, computing platforms, 1130, an orchestration run-time engine 1140, an overall count value 1165, and a distributed cache 1160 (including a first partition 1161, a second partition 1162,, and a third partition 1163). According to some embodiments, selection of one of these graphical representations with a pointer icon 1130 (or touch screen) will result in further information about that element being presented *(e.g.,* a pop-up window displaying a current value or status, *etc.).* Moreover, selection of another icon 1150 might save data, generate reports, output cache information, *etc.*

Thus, some embodiments described herein may automatically facilitate distributed cache cleanup for analytic instance runs in an efficient and accurate manner. Moreover, such an approach may increase asset utilization with predictive analytics, improving performance and efficiency that can result in lower repair costs. Moreover, embodiments may achieve new levels of performance, reliability, and availability throughout the life cycle of an industrial asset.

The following illustrates various additional embodiments of the invention. These do not constitute a definition of all possible embodiments, and those skilled in the art will understand that the present invention is applicable to many other embodiments. Further, although the following embodiments are briefly described for clarity, those skilled in the art will understand how to make any changes, if necessary, to the above-described apparatus and methods to accommodate these and other embodiments and applications.

Although specific hardware and data configurations have been described herein, note that any number of other configurations may be provided in accordance with embodiments of the present invention (e.g., some of the information associated with the databases and apparatus described herein may be split, combined, and/or handled by external systems). Applicants have discovered that embodiments described herein may be particularly useful in connection with industrial asset management systems, although embodiments may be used in connection other any other type of asset.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A system to facilitate enterprise analytics, comprising:
   a set of enterprise system devices to collect and transmit operating data associated with a set of assets; and
   a cloud-based services architecture, to receive the operating data from the set of enterprise system devices, including:
      a plurality of analytics to process the received operating data;
      a plurality of computing platforms to execute instance runs of a plurality of analytics, each instance run being associated with an industrial asset;
      a distributed cache to be shared by the plurality of analytic instance runs executing on the plurality of computing platforms; and
      an orchestration run-time execution engine to:
         maintain an overall count value that represents a number of analytic instance runs currently utilizing the distributed cache;
         wherein the distributed cache is emptied when the overall count value indicates that no analytic instance runs are still utilizing the distributed cache.
2. The system of clause 1, wherein said maintaining the overall count value includes:
   incrementing the overall count value when a new analytic instance run utilizes the distributed cache; and
   decrementing the overall count value when an analytic instance run is done using the distributed cache.
3. The system of clause 1 or clause 2, wherein a first analytic instance run utilizing the distributed cache locks the overall count value such that other analytic instance runs cannot update the overall count value until the first analytic instance run is done using the distributed cache.
4. The system of any preceding clause, wherein the first analytic instance run executes on a first computing platform and implements a distributed lock on the overall count value such that other analytic instance runs executing on other computing platforms cannot update the overall count value until the first analytic instance run is done using the distributed cache.
5. The system of any preceding clause, wherein the distributed cache is partitioned such that different partitions are associated with different information about analytic instance runs.
6. The system of any preceding clause, wherein at least one partition is associated with at least one of: (i) asset data, (ii) asset group data, (iii) orchestration step data, and (iv) analytic input output data.
7. The system of any preceding clause, wherein the distributed cache stores, for run-time look-up during processing, at least one of: (i) data related to orchestration, (ii) asset instance data, (iii) steps, and (iv) metadata.
8. The system of any preceding clause, wherein the distributed cache comprises an in-memory distributed cache.
9. The system of any preceding clause, wherein the set of enterprise system devices are associated with at least one of: (i) sensors, (ii) a big data stream, (iii) an industrial asset, (iv) a power plant, (v) a wind farm, (vi) a turbine, (vii) power distribution, (viii) fuel extraction, (ix) healthcare, (x) transportation, (xi) aviation, (xii) manufacturing, and (xiii) water processing.
10. The system of any preceding clause, wherein the cloud-based services architecture is further associated with at least one of: (i) edge software, (ii) data management, (iii) security, (iv) development operations, and (v) mobile applications.
11. A computer-implemented method to facilitate enterprise analytics, comprising:
   receiving, at a cloud-based services architecture from a set of enterprise system devices, operating data associated with a set of assets;
   processing, by the cloud-based services architecture, the received operating data;
   executing, by a plurality of computing platforms, instance runs of a plurality of analytics, each instance run being associated with an industrial asset;
   sharing a distributed cache by the plurality of analytic instance runs executing on the plurality of computing platforms; and
   maintaining, by an orchestration run-time execution engine, an overall count value that represents a number of analytic instance runs currently utilizing the distributed cache;
   wherein the distributed cache is emptied when the overall count value indicates that no analytic instance runs are still utilizing the distributed cache.
12. The method of any preceding clause, wherein said maintaining the overall count value includes:
   incrementing the overall count value when a new analytic instance run utilizes the distributed cache; and
   decrementing the overall count value when an analytic instance run is done using the distributed cache.
13. The method of any preceding clause, wherein a first analytic instance run utilizing the distributed cache locks the overall count value such that other analytic instance runs cannot update the overall count value until the first analytic instance run is done using the distributed cache.
14. The method of any preceding clause, wherein the first analytic instance run executes on a first computing platform and implements a distributed lock on the overall count value such that other analytic instance runs executing on other computing platforms cannot update the overall count value until the first analytic instance run is done using the distributed cache.
15. The method of any preceding clause, wherein the distributed cache is partitioned such that different partitions are associated with different information about analytic instance runs.
16. The method of any preceding clause, wherein at least one partition is associated with at least one of: (i) asset data, (ii) asset group data, (iii) orchestration step data, and (iv) analytic input output data.
17. A non-transitory, computer-readable medium storing instructions that, when executed by a computer processor, cause the computer processor to perform a method to facilitate enterprise analytics, the method comprising:
   receiving, at a cloud-based services architecture from a set of enterprise system devices, operating data associated with a set of assets;
   processing, by the cloud-based services architecture, the received operating data;
   executing, by a plurality of computing platforms, instance runs of a plurality of analytics, each instance run being associated with an industrial asset;
   sharing a distributed cache by the plurality of analytic instance runs executing on the plurality of computing platforms; and
   maintaining, by an orchestration run-time execution engine, an overall count value that represents a number of analytic instance runs currently utilizing the distributed cache;
   wherein the distributed cache is emptied when the overall count value indicates that no analytic instance runs are still utilizing the distributed cache.
18. The medium of any preceding clause, wherein the distributed cache comprises an in-memory distributed cache.
19. The medium of any preceding clause, wherein the set of enterprise system devices are associated with at least one of: (i) sensors, (ii) a big data stream, (iii) an industrial asset, (iv) a power plant, (v) a wind farm, (vi) a turbine, (vii) power distribution, (viii) fuel extraction, (ix) healthcare, (x) transportation, (xi) aviation, (xii) manufacturing, and (xiii) water processing.
20. The medium of any preceding clause, wherein the cloud-based services architecture is further associated with at least one of: (i) edge software, (ii) data management, (iii) security, (iv) development operations, and (v) mobile applications.

## Claims

1. A system (600) to facilitate enterprise analytics, the system comprising:
a set of enterprise system devices (610) to collect and transmit operating data associated with a set of assets; and
a cloud-based services architecture (650), to receive the operating data from the set of enterprise system devices (610), including:
a plurality of analytics (620) to process the received operating data;
a plurality of computing platforms (630) to execute instance runs of a plurality of analytics (620), each instance run being associated with an industrial asset;
a distributed cache (660) to be shared by the plurality of analytic instance runs executing on the plurality of computing platforms (630); and
an orchestration run-time execution engine (640) to:
maintain an overall count value (665) that represents a number of analytic instance runs currently utilizing the distributed cache (660);
wherein the distributed cache is emptied when the overall count value (665) indicates that no analytic instance runs are still utilizing the distributed cache (660).

2. The system (600) of claim 1, wherein said maintaining the overall count value includes:
incrementing the overall count value (665) when a new analytic instance run utilizes the distributed cache (660); and
decrementing the overall count value (665) when an analytic instance run is done using the distributed cache (660).

3. The system (600) of claim 1 or claim 2, wherein a first analytic instance run utilizing the distributed cache (660) locks the overall count value (665) such that other analytic instance runs cannot update the overall count value (665) until the first analytic instance run is done using the distributed cache (660).

4. The system (600) of any preceding claim, wherein the first analytic instance run executes on a first computing platform (630) and implements a distributed lock on the overall count value (665) such that other analytic instance runs executing on other computing platforms cannot update the overall count value (665) until the first analytic instance run is done using the distributed cache (660).

5. The system (600) of any preceding claim, wherein the distributed cache (660) is partitioned such that different partitions (661, 662, 663) are associated with different information about analytic instance runs.

6. The system (600) of claim 5, wherein at least one partition (661, 662, 663) is associated with at least one of: (i) asset data, (ii) asset group data, (iii) orchestration step data, and (iv) analytic input output data.

7. The system (600) of any preceding claim, wherein the distributed cache (660) stores, for run-time look-up during processing, at least one of: (i) data related to orchestration, (ii) asset instance data, (iii) steps, and (iv) metadata.

8. The system (600) of any preceding claim, wherein the distributed cache (660) comprises an in-memory distributed cache.

9. The system 600 of any preceding claim, wherein the set of enterprise system 610 devices are associated with at least one of: (i) sensors, (ii) a big data stream, (iii) an industrial asset, (iv) a power plant, (v) a wind farm, (vi) a turbine, (vii) power distribution, (viii) fuel extraction, (ix) healthcare, (x) transportation, (xi) aviation, (xii) manufacturing, and (xiii) water processing.

10. The system 600 of any preceding claim, wherein the cloud-based services architecture 650 is further associated with at least one of: (i) edge software, (ii) data management, (iii) security, (iv) development operations, and (v) mobile applications.

11. A computer-implemented method to facilitate enterprise analytics, comprising:
receiving, at a cloud-based services architecture from a set of enterprise system devices, operating data associated with a set of assets;
processing, by the cloud-based services architecture, the received operating data;
executing, by a plurality of computing platforms, instance runs of a plurality of analytics, each instance run being associated with an industrial asset;
sharing a distributed cache by the plurality of analytic instance runs executing on the plurality of computing platforms; and
maintaining, by an orchestration run-time execution engine, an overall count value that represents a number of analytic instance runs currently utilizing the distributed cache;
wherein the distributed cache is emptied when the overall count value indicates that no analytic instance runs are still utilizing the distributed cache.

12. The method of claim 11, wherein said maintaining the overall count value includes:
incrementing the overall count value when a new analytic instance run utilizes the distributed cache; and
decrementing the overall count value when an analytic instance run is done using the distributed cache.

13. The method of claim 11 or claim 12, wherein a first analytic instance run utilizing the distributed cache locks the overall count value such that other analytic instance runs cannot update the overall count value until the first analytic instance run is done using the distributed cache.

14. The method of any of claims 11 to 13, wherein the first analytic instance run executes on a first computing platform and implements a distributed lock on the overall count value such that other analytic instance runs executing on other computing platforms cannot update the overall count value until the first analytic instance run is done using the distributed cache.

15. A non-transitory, computer-readable medium storing instructions that, when executed by a computer processor, cause the computer processor to perform a method to facilitate enterprise analytics, the method comprising:
receiving, at a cloud-based services architecture from a set of enterprise system devices, operating data associated with a set of assets;
processing, by the cloud-based services architecture, the received operating data;
executing, by a plurality of computing platforms, instance runs of a plurality of analytics, each instance run being associated with an industrial asset;
sharing a distributed cache by the plurality of analytic instance runs executing on the plurality of computing platforms; and
maintaining, by an orchestration run-time execution engine, an overall count value that represents a number of analytic instance runs currently utilizing the distributed cache;
wherein the distributed cache is emptied when the overall count value indicates that no analytic instance runs are still utilizing the distributed cache.
